# EUROPÄISCHE PATENTSCHRIFT

(11) **EP 1 757 183 B1**
(45) Veröffentlichungstag und Bekanntmachung des Hinweises auf die Patenterteilung: **25.02.2009**
(21) Anmeldenummer: 06011592.0
(22) Anmeldetag: 06.06.2006
(51) Int. Cl.: A01F 12/40

(54) **Strohhäcksler**
Straw chopper
Hache-paille

(30) Priorität: 23.08.2005 DE 102005039992
(43) Veröffentlichungstag der Anmeldung: 28.02.2007
(73) Patentinhaber: CLAAS Selbstfahrende Erntemaschinen GmbH, 33428 Harsewinkel (DE)
(72) Erfinder: Baumgarten, Joachim Dr., 48361 Beelen (DE); Terörde, Stefan, 48231 Warendorf (DE)

(56) Entgegenhaltungen:
- GB-A- 1 520 108
- US-A- 3 093 951
- US-A- 3 261 151
- US-A1- 2002 004 417
- US-A1- 2002 107 056

## Beschreibung

Die Erfindung betrifft einen Strohhäcksler nach dem Oberbegriff des Anspruchs 1.

In der DE 39 25 701 ist ein Strohhäcksler zum Anbau an einen Mähdrescher mit einer in einem Gehäuse drehbar gelagerten Häckslerwelle offenbart. Auf der Mantelfläche der Häckslerwelle sind am Umfang mehrere Häckselmesserreihen verteilt angeordnet, wobei zwischen zwei benachbarten Häckselmessern einer Häckselmesserreihe jeweils eine Luftschaufel angeordnet, die einen Radialluftstrom erzeugt, der das Häckselgut in Längsrichtung des Mähdreschers aus dem Strohhäcksler fördert.

Nachteilig bei diesem bekannten Strohhäcksler ist, dass der Strohhäcksler keine Querförderung des Häckselgutes erzeugt.

Aus der US 2002/0107056 A1 ist eine Häckslerwelle mit darauf angeordneten gedrillt ausgebildeten Häckselmessern bekannt. Nachteilig an dem bekannten Strohhäcksler ist es, dass aufgrund der konstruktiven Ausgestaltung der gedrillten Häckselmesser kein zur Verteilung ausreichender Querluftstrom erzeugt wird und dass das Häckselgut sich zwischen den Häckselmessern festsetzen kann.

Der Erfindung liegt daher die Aufgabe zugrunde, die Nachteile des Standes der Technik zu vermeiden und insbesondere einen Strohhäcksler zu schaffen, der einen für die Strohverteilung ausreichenden Luftstrom aus dem Häckslergehäuse erzeugt, und der vermeidet, dass das Häckselgut den Strohhäcksler verstopft.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass die Luftschaufel zusätzlich einen in Längsrichtung der Drehachse gerichteten Querluftstrom erzeugt, wird eine intensivere Querförderung des Häckselgutes im Strohhäcksler und dadurch eine bessere Verteilung des Häckselgutes auf dem Feld erreicht.

Um auf einfache Weise einen in Längsrichtung der Drehachse gerichteten Querluftstrom zu erzeugen, weist die Luftschaufel eine Luftleitebene auf, wobei die Luftleitebene in einem spitzen Winkel zur Drehachse der Häckslerwelle verläuft.

Vorteilhafterweise schließen die Luftleitebene und eine lotrecht zur Drehachse der Häckslerwelle verlaufende Ebene einen Winkel ein, der größer als 0° und kleiner als 90° ist, so dass das Häckselgut an den Luftschaufeln entlang gleitet und eine Querförderung erfährt.

In vorteilhafter Weiterbildung der Erfindung sind auf der Mantelfläche der Häckslerwelle mehrere Konsolen angeordnet, wobei die Konsolen eine Durchgangsbohrung aufnehmen, in der jeweils ein in Achsrichtung der Häckslerwelle verlaufender Bolzen angeordnet ist, wobei der Bolzen starr mit der Konsole verbunden ist, so dass die Häckselmesser und/oder die Luftschaufeln auf einfache Weise mit der Häckslerwelle verbindbar sind.

Um mit wenigen Elementen eine Vielzahl von Häckselmessern und/oder Luftschaufeln an der Häckslerwelle zu lagern, weist der Bolzen zwei freie Enden auf, die aus der Konsole herausragen.

Damit die Luftschaufeln und/oder die Häckselmesser beim Stillstand der Häckslerwelle einklappen bzw. beim Häckseln einem massiven Gegenstand ausweichen können, sind die Luftschaufel und/oder das Häckselmesser drehbar auf dem freien Ende des Bolzens gelagert.

Damit das Häckselgut an den Luftschaufeln vorbeigleitet, weist die Luftschaufel eine in Drehrichtung der Häckslerwelle vorauslaufende Kante und eine nachlaufende Kante auf, wobei in einer Arbeitsstellung der Luftschaufel die vorauslaufende Kante radial weiter Außen als die nachlaufende Kante angeordnet ist.

In einer vorteilhaften Ausgestaltung sind die Luftschaufeln kürzer als die Häckselmesser ausgeführt, damit die Luftschaufeln nicht mit den Gegenmessem im Strohhäckslergehäuse kämmen.

In vorteilhafter Weiterbildung der Erfindung sind das Häckselmesser und/oder die Luftschaufel über eine Scheibe auf dem Bolzen gesichert ist, wobei die Scheibe über eine Schraubenverbindung lösbar mit dem Bolzen verbunden ist, so dass das Häckselmesser und/oder die Luftschaufel zügig und einfach montierbar bzw. austauschbar sind.

Um das Häckselgut gleichmäßig zu beiden äußeren Enden der Häckslerwelle zu fördem, sind die auf unterschiedlichen Seiten der Konsole angeordneten Luftleitschaufeln spiegelbildlich ausgeführt.

Eine konstruktiv einfache und daher kostengünstige Ausführung der Erfindung ergibt sich, wenn die Luftschaufel aus einem Blech hergestellt ist und die Luftleitebene durch Abkanten des Bleches gefertigt ist.

Damit der Querluftstrom ohne Austausch der Luftschaufeln veränderbar ist, ist der Abstand zwischen Luftleitebene und der Drehachse und/oder der Luftleitwinkel der Luftleitebene verstellbar.

In einer vorteilhaften Ausgestaltung der Erfindung können die Luftschaufeln an separaten Konsolen getrennt von den Häckselmessern auf dem Umfang der Häckslerwelle angeordnet sein, so dass in einem Teilbereich des Strohhäckslers lediglich eine Verteilung des Erntegutes im Strohhäcksler erfolgt.

Eine besonders einfache und daher kostengünstige Ausführung der Erfindung ergibt sich, wenn die Luftschaufeln starr mit den Häckselmessern verbunden sind, so dass sie nicht separat mit der Häckslerwelle verbunden werden müssen.

In einer weiteren vorteilhaften Weiterbildung der Erfindung weist die Luftschaufel an wenigstens einer Kante wenigstens eine Schneide auf, so dass eine. Erhöhung der Zerkleinerung des Häckselgut erzielt wird.

Damit das Häckselgut im Außenbereich eine größerer Wurfweite erzielt, nimmt die Anzahl der Luftschaufeln von der Mitte der Häckslerwelle zu den Enden der Häckslerwelle hin zu.

In einer vorteilhaften Ausgestaltung der Erfindung kann die Neigung der Luftschaufeln auf einer Häckslerwelle variieren, um die Luftströme über die Breite der Häckslerwelle an die gewünschte Verteilung des Häckselgutes anzupassen.

Um im Außenbereich das Häckselgut stärker zu beschleunigen, nimmt die Neigung der Luftleitebenen in Richtung der Enden der Häckslerwelle zu.

Weitere vorteilhafte Ausgestaltungen sind Gegenstand weiterer Unteransprüche und werden nachfolgend an Hand des in mehrerer Figuren dargestellten Ausführungsbeispiele näher erläutert.

Es zeigen:
- Fig. 1: eine schematische Seitenansicht eines Mähdreschers mit erfindungsgemäßem Strohhäcksler und eine Detail der erfindungsgemäßen Luftschaufel,
- Fig. 2: einen Ausschnitt der Häckslerwelle in der Vorderansicht.
- Fig.3: einen Ausschnitt einer weiteren erfindungsgemäßen Ausführung der Häckslerwelle.

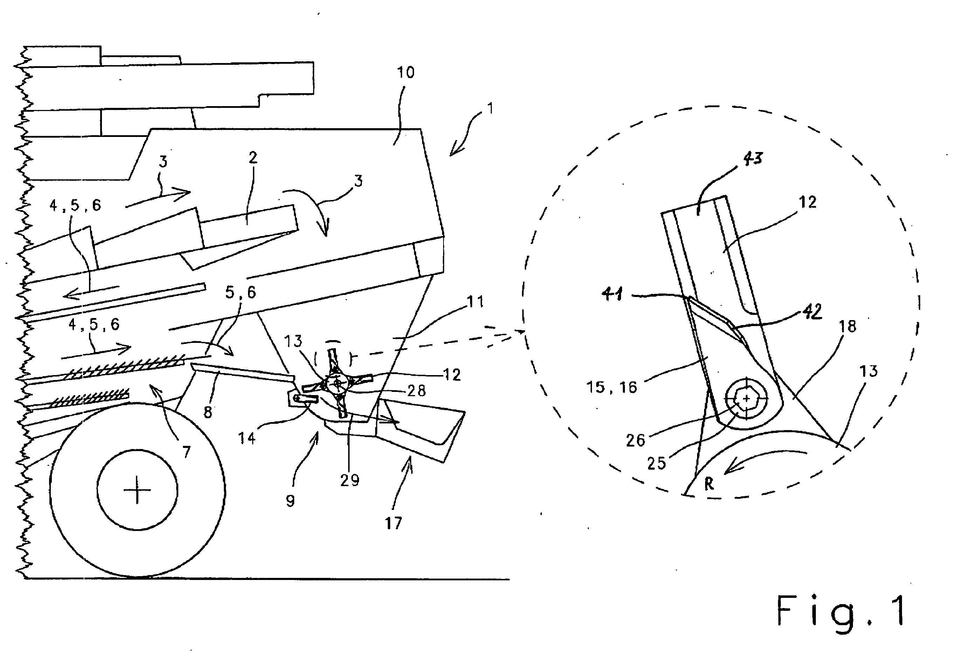

Fig.1 zeigt die Seitenansicht des hinteren Teils eines Mähdreschers 1. Über die Hordenschüttler 2 wird ein ausgedroschenes Stroh-Spreu-Gemisch 3 in den hinteren Bereich des Mähdreschers 1 gefördert, wobei die noch im Stroh-Spreu-Gemisch 3 befindlichen Kömer 4 sowie evtl. Kurzstroh 5 und Spreu 6 abgetrennt werden. Die Körner 4, das Kurzstroh 5 und die Spreu 6 werden auf an sich bekannte Weise einer Siebeinrichtung 7 zugeführt. Gleichzeitig wird ein von dem nicht dargestellten Dreschwerk abgeschiedenes Korn-Spreu-Gemisch 4, 5, 6 zu der Siebeinrichtung 7 gefördert. In der Siebeinrichtung 7 werden die Kömer 4 vom Kurzstroh 5 und der Spreu 6 getrennt. Der über die Siebeinrichtung 7 überlaufende im wesentlichen aus Kurzstroh 5 und Spreu 6 bestehende Siebüberlauf gelangt über einen Zuführboden 8 in einen Strohhäcksler 9, der unterhalb einer Strohausfallhaube 10 angeordnet ist. Auch das über den Hordenschüttler 2 bewegte Stroh-Spreu-Gemisch 3 sowie ein geringer Anteil an Verlustkörnern fällt am Ende des Hordenschüttlers 2 über die Strohausfallhaube 10 in den Strohhäcksler 9. Der Strohhäcksler 9 besteht aus einer in einem Häckslergehäuse 11 gelagerten, rotierend angetriebenen Häckslerwelle 13, die auf ihrem Umfang mit Häckselmessern 12 und an späterer Stelle noch näher beschriebenen erfindungsgemäßen Luftschaufeln 15, 16 besetzt ist. Die Häckselmesser 12 kämmen mit in dem Häckslergehäuse 11 starr befestigten Gegenmessem 14. Die Luftschaufeln 15, 16 sind kürzer als die Häckselmesser 12 ausgeführt und bewegen sich an den Gegenmessem 14 vorbei. Das Kurzstroh 5, die Spreu 6 und das Stroh-Spreu-Gemisch 3 werden von dem Strohhäcksler 9 zerkleinert und beschleunigt. Dem Strohhäcksler 9 kann eine an sich bekannte Breitverteileinrichtung 17 nachgeordnet sein, die den aus dem Strohhäcksler 9 austretenden, zerkleinerten Erntegutstrom gleichmäßig auf dem Feld verteilt, um den Verrottungsprozess des Emtegutes zu begünstigen. Wie in dem Detail der Fig. 1 dargestellt, weist die Luftschaufel 15, 16 eine in Drehrichtung R der Häckslerwelle 28 vorauslaufende Kante 41 und eine nachlaufende Kante 42 auf, wobei in einer Arbeitsstellung 43 der Luftschaufel 15, 16 die vorauslaufende Kante 41 radial weiter Außen als die nachlaufende Kante 42 angeordnet ist, so dass der Emtegutstrom an der geneigten Luftschaufel 15, 16 vorbei gleitet.

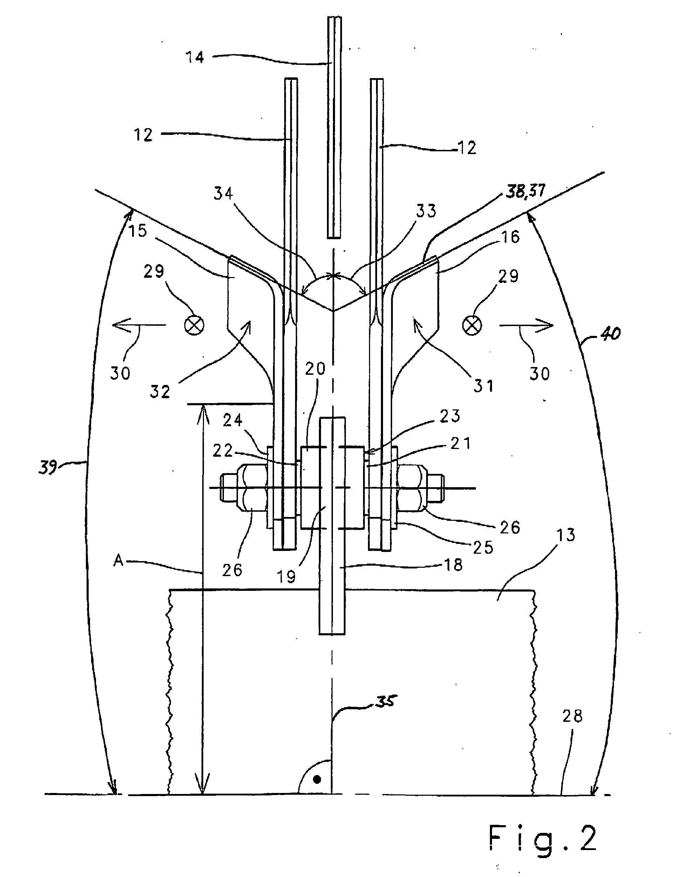

Fig. 2 zeigt einen Aussschnitt der Häckslerwelle 13 in der Vorderansicht. Auf dem Umfang der Häckslerwelle 13 sind mehrere Konsolen 18 angeordnet. Die Konsolen 18 weisen jeweils eine Durchgangsbohrung 19 auf, in der jeweils ein in Achsrichtung der Häckslerwelle 13 verlaufender zylindrischer Bolzen 20 angeordnet ist, der starr mit der Konsole 18 verbunden ist. Auf den beidseitig aus der Konsole 18 ragenden freien Enden 21, 22 des Bolzens 20 sind jeweils ein Häckselmesser 12 und daneben eine Luftschaufel 15, 16 frei drehbar gelagert, wobei die Häckselmesser 12 innenseitig und die Luftschaufeln 15, 16 außenseitig angeordnet sind und die Luftschaufeln auf unterschiedlichen Seiten der Konsole 18 spiegelbildlich ausgeführt sind. Es ist denkbar, dass auf einer Seite der Konsole 18 nur ein Häckselmesser 12 und auf der anderen Seite nur eine Luftschaufel 15, 16 auf dem Bolzen 20 drehbar gelagert sein können. Ebenso ist vorstellbar, dass einem Häckselmesser 12 beidseitig Luftschaufeln 15, 16 zugeordnet sein können, die vorteilhafl-rweise spiegelbildlich ausgeführt sind.
Die Häckselmesser 12 und die Luftschaufeln 15, 16 sind auf der der Konsole 18 zugewandten Seite über einen Bund 23 am Bolzen 20 und auf der der Konsole 18 abgewandten Seite über jeweils eine Scheibe 24, 25 axial gesichert, wobei die Scheiben 24, 25 über eine Schraubenverbindung 26 lösbar mit dem Bolzen 19 verbunden sind.
Die Luftschaufeln 15 könnten in einer weiteren Ausführung auch starr mit dem Häckselmesser 12 verbunden, beispielsweise verschweißt sein.
Um sowohl einen quer zur Längsrichtung der Drehachse 28 gerichteten Radialluftstrom 29 und zusätzlich auch einen in Längsrichtung der Drehachse 28 gerichteten Querluftstrom 30 zu erzeugen, weisen die Luftschaufeln 15, 16 jeweils eine erfindungsgemäße Luftleitebene 30, 31 auf, die in einem spitzen Winkel 39, 40 zur Drehachse 28 der Häckslerwelle 13 verläuft. Die Luftleitebene 31, 32 und eine zur Drehachse 28 lotrechte Ebene 35 schließen einen Luftleitwinkel 33, 34 ein, der größer als 0° und kleiner als 90° ist. Die Luftschaufel 15 ist aus einem Blech hergestellt und die Luftleitebene 31, 32 wird durch Abkanten des Blechs 15, 16 gefertigt. Die Luftschaufel 15, 16 weist an ihrer oberen Kante 38 eine Schneide 39 auf, mit der das Häckselgut zusätzlich zerkleinert wird.

Der von den Luftschaufeln 15, 16 erzeugte zusätzliche Querluftstrom 30 bewirkt eine besserer Verteilung des Häckselgutes im Strohhäcksler 9 und bewirkt dadurch eine größere Wurfweite.

Die Anzahl und Anordnung der Häckselmesser 12 und Luftschaufeln 15, 16 auf dem Umfang der Häckseltrommel 13 ist variabel, jedoch ist bei der Verteilung darauf zu achten, dass die rotierende Häckslerwelle 13 keine Unwucht aufweist.
Es ist vorstellbar, dass die Luftleitbleche 15, 16 nur an den Enden der Häckslerwelle 13 auf dem Umfang der Häckslerwelle 13 angeordnet sein können oder die Anzahl der Luftschaufeln 15, 16 von der Mitte der Häckslerwelle 13 zu den Enden der Häckslerwelle 13 hin zunimmt.
Ebenso ist es möglich, dass die Neigung der Luftschaufeln 15, 16 der Luftschaufeln 15, 16 auf einer Häckslerwelle 13 variieren kann, beispielweise ist eine Ausführung vorstellbar, bei der Neigung der Luftleitebenen 31, 32 der Luftschaufeln 15, 16 in Richtung der Enden der Häckslerwelle 13 hin zunimmt.

Die Stärke der Luftströme 29, 30 ist weiterhin abhängig von der-Anzahl der Luftleitschaufeln 15, 16 auf der Häckslerwelle 13, der Größe der Luftleitebene 31, 32 der Luftschaufeln 15, 16, dem Abstand der Luftleitebene 31, 32 zur Drehachse 28 der Häckslerwelle 13 und dem Luftleitwinkel 33, 34 der Luftleitebene 31, 32 zur Drehachse.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen, wie er durch die Ansprüche definiert ist.

### Bezugszeichenliste:

- 1: Mähdrescher
- 2: Hordenschüttler
- 3: Stroh-Spreu-Gemisch
- 4: Körner
- 5: Kurzstroh
- 6: Spreu
- 7: Siebeinrichtung
- 8: Zuführbleche
- 9: Strohhäcksler
- 10: Strohausfallhaube
- 11: Häckslergehäuse
- 12: Häckselmesser
- 13: Häckslerwelle
- 14: Gegenmesser
- 15: Luftschaufel
- 16: Luftschaufel
- 17: Breitverteileinrichtung
- 18: Konsole
- 19: Durchgangsbohrung
- 20: Bolzen
- 21: Freies Ende
- 22: Freies Ende
- 23: Bund
- 24: Scheibe
- 25: Scheibe
- 26: Schraubenverbindung
- 28: Drehachse
- 29: Radialluftstrom
- 30: Querluftstrom
- 31: Luftleitebene
- 32: Luftleitebene
- 33: Luftleitwinkel
- 34: Luftleitwinkel
- 35: Ebene
- 36:
- 37: Kante
- 38: Schneide
- 39: Winkel
- 40: Winkel
- 41: Vorauseilende Kante
- 42: Nacheilende Kante
- 43: Arbeitsstellung

- R: Drehrichtung

## Patentansprüche

1. Strohhäcksler mit einer um eine Drehachse (28) rotierend angetriebenen Häckslerwelle (13) und wenigstens einem auf der Mantelfläche der Häckslerwelle (13) angeordneten Häckselmesser (12) und wenigstens einer auf der Mantelfläche der Häckslerwelle (13) angeordneten Luftschaufel (15, 16) zur Erzeugung eines Radialluftstroms (29), wobei die Luftschaufel (15, 16) zusätzlich einen in Längsrichtung der Drehachse (28) gerichteten Querluftstrom (30) erzeugt,
**dadurch gekennzeichnet,**
**dass** die Luftleitschaufel (15, 16) eine Luftleitebene (31, 32) aufweist, wobei die Luftleitebene (31, 32) in einem spitzen Winkel (39, 40) zur Drehachse (28) der Häckslerwelle (13) verläuft und wobei die Luftschaufel (15, 16) eine in Drehrichtung (R) der Häckslerwelle (28) vorauslaufende Kante (41) und eine nachlaufende Kante (42) aufweist, wobei in einer Arbeitsstellung (43) der Luftschaufel (15, 16) die vorauslaufende Kante (41) radial weiter Außen als die nachlaufende Kante (42) angeordnet ist.

2. Strohhäcksler nach Anspruch 1,
**dadurch gekennzeichnet,**
**dass** die Luftleitebene (31, 32) und eine lotrecht zur Drehachse (28) der Häckslerwelle (13) verlaufende Ebene (35) einen Luftleitwinkel (33, 34) einschließen, der größer als 0° und kleiner 90° ist.

3. Strohhäcksler nach wenigstens einem der vorhergehenden Ansprüche,
**dadurch gekennzeichnet,**
**dass** auf der Mantelfläche der Häckslerwelle (13) mehrere Konsolen (18) angeordnet sind, wobei die Konsolen (18) eine Durchgangsbohrung (19) aufnehmen, in der jeweils ein in Achsrichtung der Häckslerwelle (13) verlaufender Bolzen (20) angeordnet ist, wobei der Bolzen (20) starr mit der Konsole (18) verbunden ist.

4. Strohhäcksler nach wenigstens einem der vorhergehenden Ansprüche,
**dadurch gekennzeichnet,**
**dass** der Bolzen (20) zwei freie Enden (21, 22) aufweist, die aus der Konsole (18) herausragen.

5. Strohhäcksler nach wenigstens einem der vorhergehenden Ansprüche,
**dadurch gekennzeichnet,**
**dass** das Häckselmesser (12) und/oder die Luftschaufel (15, 16) auf dem freien Ende (21, 22) des Bolzens (20) drehbar gelagert ist/sind.

6. Strohhäcksler nach wenigstens einem der vorhergehenden Ansprüche,
**dadurch gekennzeichnet,**
**dass** die Luftschaufeln (15, 16) kürzer als die Häckselmesser (12) ausgeführt sind.

7. Strohhäcksler nach wenigstens einem der vorhergehenden Ansprüche,
**dadurch gekennzeichnet,**
**dass** das Häckselmesser (12) und/oder die Luftschaufel (15, 16) über eine Scheibe (24, 25) auf dem Bolzen gesichert ist, wobei die Scheibe (24, 25) über eine Schraubenverbindung (26) lösbar mit dem Bolzen (20) verbunden ist.

8. Strohhäcksler nach wenigstens einem der vorhergehenden Ansprüche,
**dadurch gekennzeichnet,**
**dass** die auf unterschiedlichen Seiten einer Konsole (18) angeordneten Luftschaufeln (15, 16) spiegelbildlich ausgeführt sind.

9. Strohhäcksler nach wenigstens einem der vorhergehenden Ansprüche,
**dadurch gekennzeichnet,**
**dass** die Luftschaufel (15,16) aus einem Blech hergestellt ist und die Luftleitebene (31, 32) durch Abkanten des Blechs gefertigt ist.

10. Strohhäcksler nach wenigstens einem der vorhergehenden Ansprüche,
**dadurch gekennzeichnet,**
**dass** die Stärke der Luftstöme (29, 30) durch Veränderung des Abstandes zwischen Luftleitebene und der Drehachse (28) und/oder durch Veränderung des Luftleitwinkels der Luftleitebene verstellbar ist.

11. Strohhäcksler nach wenigstens einem der vorhergehenden Ansprüche,
**dadurch gekennzeichnet,**
**dass** die Luftschaufeln (15, 16) an separaten Konsolen getrennt von den Häckselmessern (12) auf dem Umfang der Häckslerwelle (13) angeordnet sind.

12. Strohhäcksler nach wenigstens einem der vorhergehenden Ansprüche,
**dadurch gekennzeichnet,**
**dass** die Luftschaufeln (15, 16) starr mit dem Häckselmesser (12) verbunden sind.

13. Strohhäcksler nach wenigstens einem der vorhergehenden Ansprüche,
**dadurch gekennzeichnet,**
**dass** die Luftschaufel (15, 16) an wenigstens einer Kante (37) wenigstens eine Schneide (38) aufweist.

14. Strohhäcksler nach wenigstens einem der vorhergehenden Ansprüche,
**dadurch gekennzeichnet,**
**dass** die Anzahl der Luftschaufeln (15, 16) von der Mitte der Häckslerwelle (13) zu den Enden der Häckslerwelle (13) hin Zunimmt.

15. Strohhäcksler nach wenigstens einem der vorhergehenden Ansprüche,
**dadurch gekennzeichnet,**
**dass** die Neigung der Luftleitebenen (31, 32) der Luftschaufeln (15, 16) auf einer Häckslerwelle (13) variieren kann.

16. Strohhäcksler nach wenigstens einem der vorhergehenden Ansprüche,
**dadurch gekennzeichnet,**
**dass** die Neigung der Luftleitebenen (31, 32) der Luftschaufeln (15,16) in Richtung der Enden der Häckslerwelle (13) hin zunimmt.

## Claims

1. A straw chopper comprising a chopper shaft (13) driven in rotation about an axis of rotation (28) and at least one chopping blade (12) arranged on the peripheral surface of the chopper shaft (13) and at least one air vane (15, 16) arranged on the peripheral surface of the chopper shaft (13) to produce a radial air flow (29), wherein the air vanes (15, 16) additionally produce a transverse air flow directed in the longitudinal direction of the axis of rotation (28),
**characterised in that** the air guide vane (15, 16) has an air guide plane (31,32), wherein the air guide plane (31, 32) extends at an acute angle (39, 40) relative to the axis of rotation (28) of the chopper shaft (13) and wherein the air vane (15, 16) has an edge (41) leading in the direction of rotation (R) of the chopper shaft (13) and a trailing edge (42), wherein in a working position (43) of the air vane (15, 16) the leading edge (41) is arranged radially further outwardly than the trailing edge (42).

2. A straw chopper according to claim 1 **characterised in that** the air guide plane (31, 32) and a plane (35) extending perpendicularly to the axis of rotation (28) of the chopper shaft (13) include an air guide angle (33, 34) which is larger than 0° and less than 90°.

3. A straw chopper according to at least one of the preceding claims **characterised in that** a plurality of brackets (18) are arranged on the peripheral surface of the chopper shaft (13), wherein the brackets (18) have a through bore (19) in which a respective pin (20) extending in the axial direction of the chopper shaft (13) is arranged, the pin (20) being rigidly connected to the bracket (18).

4. A straw chopper according to at least one of the preceding claims **characterised in that** the pin (20) has two free ends (21, 22) which protrude out of the bracket (18).

5. A straw chopper according to at least one of the preceding claims **characterised in that** the chopping blade (12) and/or the air vane (15, 16) is/are mounted rotatably on the free end (21, 22) of the pin (20).

6. A straw chopper according to at least one of the preceding claims **characterised in that** the air vanes (15, 16) are shorter than the chopping blades (12).

7. A straw chopper according to at least one of the preceding claims **characterised in that** the chopping blade (12) and/or the air vane (15, 16) are secured on the pin by way of a disc (24, 25), the disc (24, 25) being releasably connected to the pin (20) by way of a screw connection (26).

8. A straw chopper according to at least one of the preceding claims **characterised in that** the air vanes (15, 16) arranged on different sides of a bracket (19) are of a mirror-image configuration.

9. A straw chopper according to at least one of the preceding claims **characterised in that** the air vane (15, 16) is made from a metal sheet and the air guide plane (31, 32) is afforded by angling the metal sheet.

10. A straw chopper according to at least one of the preceding claims **characterised in that** the strength of the air flows (29, 30) is adjustable by altering the spacing between the air guide plane and the axis of rotation (28) and/or by altering the air guide angle of the air guide plane.

11. A straw chopper according to at least one of the preceding claims **characterised in that** the air vanes (15, 16) are arranged at separate brackets separately from the chopping blades (12) on the periphery of the chopper shaft (13).

12. A straw chopper according to at least one of the preceding claims **characterised in that** the air vanes (15, 16) are rigidly connected to the chopping blades (12).

13. A straw chopper according to at least one of the preceding claims **characterised in that** the air vane (15, 16) has at least one cutting edge (38) at at least one edge (37).

14. A straw chopper according to at least one of the preceding claims **characterised in that** the number of air vanes (15, 16) increases from the centre of the chopper shaft (13) towards the ends of the chopper shaft (13).

15. A straw chopper according to at least one of the preceding claims **characterised in that** the inclination of the air guide planes (31, 32) of the air vanes (15, 16) on a chopper shaft (13) can vary.

16. A straw chopper according to at least one of the preceding claims **characterised in that** the inclination of the air guide planes (31, 32) of the air vanes (15, 16) increases in the direction towards the ends of the chopper shaft (13).

## Revendications

1. Hache-paille avec un arbre de hacheuse (13) entraîné en rotation autour d'un axe de rotation (28) et au moins un couteau de hacheuse (12) disposé sur la surface périphérique de l'arbre de hacheuse (13) et au moins une ailette d'air (15, 16) disposée sur la surface périphérique de l'arbre de hacheuse (13) pour générer un flux d'air radial (29), dans lequel l'ailette d'air (15, 16) génère en outre un flux d'air transversal (30) dirigé dans le sens longitudinal de l'axe de rotation (28),
**caractérisé en ce**
**que** l'ailette conductrice d'air (15, 16) présente un plan conducteur d'air (31, 32), le plan conducteur d'air (31, 32) s'étendant en angle aigu (39, 40) par rapport à l'axe de rotation (28) de l'arbre de hacheuse (13) et l'ailette d'air (15, 16) présentant une arête (41) antérieure dans le sens de rotation (R) de l'arbre de hacheuse (28) et une arête (42) postérieure, l'arête (41) antérieure étant disposée dans une position de travail (43) de l'ailette d'air (15, 16) radialement plus à l'extérieur que l'arête (42) postérieure.

2. Hache-paille selon la revendication 1,
**caractérisé en ce**
**que** le plan conducteur d'air (31, 32) et un plan (35) s'étendant perpendiculairement à l'axe de rotation (28) de l'arbre de hacheuse (13) incluent un angle conducteur d'air (33, 34) qui est supérieur à 0 ° et inférieur à 90 °.

3. Hache-paille selon au moins l'une quelconque des revendications précédentes,
**caractérisé en ce**
**que** plusieurs consoles (18) sont disposées sur la surface périphérique de l'arbre de hacheuse (13), les consoles (18) recevant un perçage débouchant (19), dans lequel est disposé respectivement un boulon (20) s'étendant dans le sens de l'axe de l'arbre de hacheuse (13), le boulon (20) étant relié rigidement à la console (18).

4. Hache-paille selon au moins l'une quelconque des revendications précédentes,
**caractérisé en ce**
**que** le boulon (20) présente deux extrémités (21, 22) libres qui dépassent de la console (18).

5. Hache-paille selon au moins l'une quelconque des revendications précédentes,
**caractérisé en ce**
**que** le couteau de hacheuse (12) et/ou l'ailette d'air (15, 16) est/sont logé(s) à rotation sur l'extrémité (21, 22) libre du boulon (20).

6. Hache-paille selon au moins l'une quelconque des revendications précédentes,
**caractérisé en ce**
**que** les ailettes d'air (15, 16) sont réalisées plus courtes que les couteaux de hacheuse (12).

7. Hache-paille selon au moins l'une quelconque des revendications précédentes,
**caractérisé en ce**
**que** le couteau de hacheuse (12) et/ou l'ailette d'air (15, 16) est bloquée par une rondelle (24, 25) sur le boulon, la rondelle (24, 25) étant reliée de manière amovible par un boulonnage (26) au boulon (20).

8. Hache-paille selon au moins l'une quelconque des revendications précédentes,
**caractérisé en ce**
**que** les ailettes d'air (15, 16) disposées sur des côtés différents d'une console (18) sont réalisées de manière symétrique.

9. Hache-paille selon au moins l'une quelconque des revendications précédentes,
**caractérisé en ce**
**que** l'ailette d'air (15, 16) est fabriquée en une tôle et le plan conducteur d'air (31, 32) est fabriqué par repliage de la tôle.

10. Hache-paille selon au moins l'une quelconque des revendications précédentes,
**caractérisé en ce**
**que** le débit des flux d'air (29, 30) peut être réglé par la modification de la distance entre le plan conducteur d'air et l'axe de rotation (28) et/ou par la modification de l'angle conducteur d'air du plan conducteur d'air.

11. Hache-paille selon au moins l'une quelconque des revendications précédentes,
**caractérisé en ce**
**que** les ailettes d'air (15, 16) sont disposées sur des consoles séparées séparément des couteaux de hacheuse (12) sur la périphérie de l'arbre de hacheuse (13).

12. Hache-paille selon au moins l'une quelconque des revendications précédentes,
**caractérisé en ce**
**que** les ailettes d'air (15, 16) sont reliées rigidement au couteau de hacheuse (12).

13. Hache-paille selon au moins l'une quelconque des revendications précédentes,
**caractérisé en ce**
**que** l'ailette d'air (15, 16) présente sur au moins une arête (37) au moins une lame (38).

14. Hache-paille selon au moins l'une quelconque des revendications précédentes,
**caractérisé en ce**
**que** le nombre d'ailettes d'air (15, 16) augmente du milieu de l'arbre de hacheuse (13) vers les extrémités de l'arbre de hacheuse (13).

15. Hache-paille selon au moins l'une quelconque des revendications précédentes,
**caractérisé en ce**
**que** l'inclinaison des plans conducteurs d'air (31, 32) des ailettes d'air (15, 16) sur un arbre de hacheuse (13) peut varier.

16. Hache-paille selon au moins l'une quelconque des revendications précédentes,
**caractérisé en ce**
**que** l'inclinaison des plans conducteurs d'air (31, 32) des ailettes d'air (15, 16) augmente en direction des extrémités de l'arbre de hacheuse (13).
